Europäisches Patentamt

European Patent Office

Office européen des brevets

(19)

(11) **EP 1 412 926 B1**

(12) **FASCICULE DE BREVET EUROPEEN**

(45) Date de publication et mention
de la délivrance du brevet:
**28.09.2005 Bulletin 2005/39**

(21) Numéro de dépôt: **02794804.1**

(22) Date de dépôt: **24.07.2002**

(51) Int Cl.⁷: **G07F 17/30**, G11B 27/00,
G07F 19/00

(86) Numéro de dépôt international:
**PCT/FR2002/002641**

(87) Numéro de publication internationale:
**WO 2003/017213 (27.02.2003 Gazette 2003/09)**

(54) **PROCEDE DE GESTION D'ACHAT DE CONTENUS NUMERIQUES DIFFUSES ET MOYENS DE TELECHARGEMENT DE TELS CONTENUS**

VERFAHREN ZUR VERWALTUNG DES KAUFS VON RUNDSENDE-DIGITALINHALTEN UND
MITTEL ZUM HERUNTERLADEN DIESER

METHOD FOR MANAGING PURCHASE OF BROADCAST DIGITAL CONTENTS AND MEANS FOR
DOWNLOADING SAME

(84) Etats contractants désignés:
**DE FR GB**

(30) Priorité: **27.07.2001 FR 0110085**

(43) Date de publication de la demande:
**28.04.2004 Bulletin 2004/18**

(73) Titulaire: **Thomson Licensing S.A.**
**92100 Boulogne-Billancourt (FR)**

(72) Inventeurs:
• **DURAND, Alain**
**F-35000 Rennes (FR)**
• **LAURENT, Christophe**
**F-35630 Vignoc (FR)**

(74) Mandataire: **Berthier, Karine**
**THOMSON,**
**European Patent Operations,**
**46 Quai Alphonse Le Gallo**
**92648 Boulogne Cédex (FR)**

(56) Documents cités:
**WO-A-01/41023**          **FR-A- 2 786 973**
**FR-A- 2 795 540**         **US-A- 5 809 144**
**US-A- 6 058 381**

EP 1 412 926 B1

## Description

Domaine de l'invention

La présente invention concerne un procédé de gestion d'achat de contenus numériques.

L'invention est mise en oeuvre dans une installation du type comprenant des moyens de diffusion des contenus numériques, au moins un terminal distant adapté pour la réception des contenus diffusés et des moyens de stockage des contenus numériques reliés aux moyens de diffusion.

Etat de la technique

Généralement une telle installation comporte en outre un centre d'appel qu'un utilisateur du terminal peut contacter si, lors de la diffusion par les moyens de diffusion d'un contenu numérique, il souhaite en effectuer la commande. Une telle installation comporte aussi un centre d'achat vers lequel l'utilisateur est dirigé par le centre d'appel, après que celui-ci lui a fourni des informations commerciales sur le contenu numérique diffusé.

Cependant, cette installation ne permet pas à l'utilisateur d'émettre simplement et de façon impulsive une commande du contenu numérique diffusé.

Le document FR-A-2 795 540 décrit un procédé d'acquisition de séquences audio vidéo ou textuelles auprès d'un site distant depuis un terminal local selon lequel le terminal reçoit des signaux télédiffusés contenant les données de la séquence et des données d'identification de la séquence diffusée, ces dernières données pouvant être transmises, dans une requête d'acquisition produite par l'utilisateur du terminal, au site distant pour acquérir la séquence. Lorsque le site distant reçoit cette requête, il transmet les données de la séquence au terminal de l'utilisateur. Il est également prévu dans ce document que des données d'autorisation d'accès et/ou de décryptage des données de la séquence soient transmises par le site distant au terminal lorsque certaines conditions sont remplies.

Néanmoins, le fait de transmettre la séquence de données commandée avant même d'avoir procédé aux vérifications de validité du paiement ou d'autorisation d'accès par l'utilisateur peut présenter certains risques car l'utilisateur peut tenter de se procurer frauduleusement des séquences de données.

Exposé de l'invention

L'invention vise à remédier à cet inconvénient, en proposant un procédé de gestion d'achat de contenu permettant à l'utilisateur d'émettre simplement et de façon impulsive une commande d'un contenu numérique dont il souhaite faire l'acquisition, notamment pendant sa diffusion, tout en évitant que l'utilisateur puisse accéder au contenu avant de l'avoir payé.

L'invention a donc pour objet un procédé de gestion d'achat de contenu numérique selon la revendication 1.

Ainsi, le procédé de gestion d'achat de contenus numériques selon l'invention permet de s'assurer que l'utilisateur ne reçoit le contenu commandé qu'à l'issu d'une étape (réussie) de paiement. Un autre avantage de ce procédé de gestion d'achat est qu'il permet l'achat impulsif de contenus numériques diffusés à l'unité, tels qu'une chanson au lieu d'un album entier. L'invention permet en outre avantageusement d'éviter les téléchargements inutiles qui pourraient charger dangereusement un serveur de téléchargement inclus dans les moyens de traitement. En effet, un utilisateur aura plus facilement tendance à demander un téléchargement de données s'il ne doit pas payer tout de suite alors que si, comme dans l'invention, le téléchargement n'est effectué qu'après l'étape de paiement, l'utilisateur ne téléchargera que les contenu qu'il souhaite réellement acquérir.

Le procédé de gestion d'achat de contenus numériques selon l'invention peut en outre comporter l'une ou plusieurs des caractéristiques suivantes :

- les moyens de traitement comportent des moyens de téléchargement du contenu numérique et le ticket de téléchargement comporte un germe de génération, à l'aide d'un générateur pseudo-aléatoire l'utilisant comme variable d'entrée, d'une clé pseudo-aléatoire, cette clé étant utilisée par les moyens de téléchargement pour crypter le contenu numérique lors de l'étape d) de téléchargement;
- le ticket de téléchargement comporte l'adresse universelle URL des moyens de téléchargement ;
- le ticket de téléchargement est transmis au terminal sous une forme cryptée à l'aide d'une clé secrète symétrique ;
- l'étape de paiement est mise en oeuvre par le terminal communiquant avec des moyens de gestion de transactions financières auxquels est transmise la commande d'achat et lesquels délivrent le ticket de téléchargement reçu par le terminal ;
- le terminal reçoit en outre des moyens de gestion de transactions financières un identifiant de transaction ;
- la preuve de paiement contient ledit identifiant de transaction reçu des moyens de gestion de transactions financières et un message d'authentification ;
- l'étape d) de téléchargement comporte une étape de division du contenu numérique en une pluralité de sous-contenus numériques successifs et de codage de chacun de ces sous-contenus numériques, suivie d'une étape de téléchargement vers le terminal de ces sous-contenus numériques, successivement ;
- chaque sous-contenu numérique codé, à l'exception du dernier, comporte le sous-contenu numérique correspondant et la valeur d'une fonction de hachage appliquée au sous-contenu numérique codé suivant ; et

- l'étape de téléchargement comporte une étape de génération d'un message comportant le nombre de sous-contenus numériques ainsi que la valeur de la fonction de hachage appliquée au premier sous-contenu numérique codé, ce message étant authentifié à l'aide d'une clé secrète symétrique connue uniquement des moyens de traitement de la commande et du terminal.

L'invention concerne également des moyens de téléchargement de contenus numériques à travers un réseau de transmission d'informations selon la revendication 10.

Les moyens de téléchargement selon l'invention peuvent en outre comporter l'une ou plusieurs des caractéristiques suivantes :

- ils sont adaptés à transmettre le contenu numérique sous une forme cryptée à l'aide d'une clé pseudo-aléatoire générée à l'aide d'un germe, ce germe ayant été reçu au préalable par le terminal émetteur de la preuve de paiement dans un ticket de téléchargement à l'issu de l'étape de paiement ;
- ils comportent des moyens de division du contenu numérique en une pluralité de sous-contenus numériques successifs, des moyens de codage de chacun de ces sous-contenus numériques et des moyens de transmissions successives de ces sous-contenus numériques ;
- chaque sous-contenu numérique codé, à l'exception du dernier, comporte un sous-contenu numérique correspondant et la valeur d'une fonction de hachage appliquée au sous-contenu numérique suivant ; et
- les moyens de téléchargement comportent des moyens de génération d'un message comportant le nombre de sous-contenus numériques ainsi que la valeur de la fonction de hachage appliquée au premier sous-contenu numérique codé.

Brève description des dessins

L'invention sera mieux comprise à la lecture de la description qui va suivre, donnée uniquement à titre d'exemple et faite en se référant aux dessins annexés sur lesquels :

- la figure 1 représente schématiquement une installation de gestion d'achat de contenus numériques dans laquelle est mise en oeuvre l'invention ;
- la figure 2 représente les étapes d'un procédé selon l'invention mis en oeuvre dans l'installation de la figure 1, selon un premier mode de réalisation ; et
- la figure 3 représente une partie des étapes d'un procédé selon l'invention mis en oeuvre dans l'installation de la figure 1, selon un second mode de réalisation.

Description détaillée de modes de réalisation de l'invention

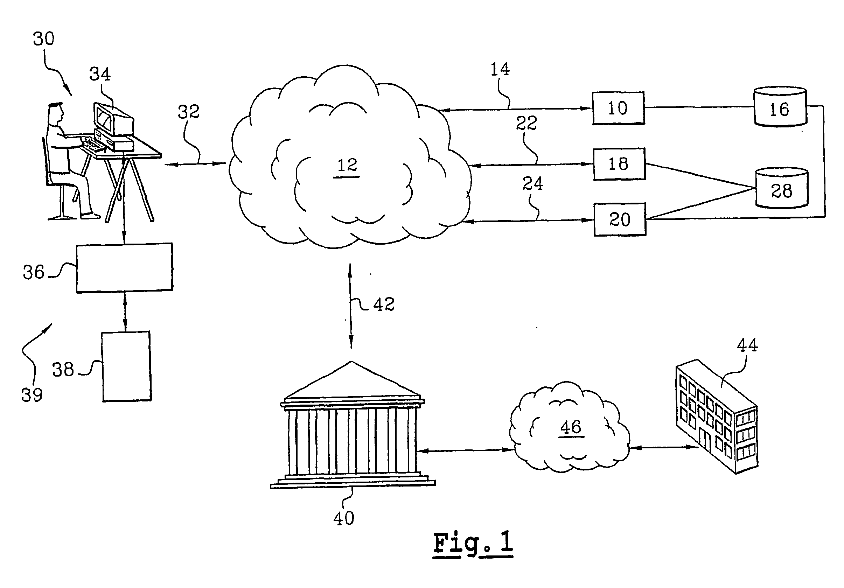

L'installation de gestion d'achat de contenus numériques représentée à la figure 1 comporte des moyens de diffusion 10 reliés à un réseau 12 de transmission d'informations tel qu'Internet, au moyen d'une liaison de communication bidirectionnelle classique 14. Les moyens de diffusion 10 sont par un exemple une radio Internet comprenant un serveur de type classique relié à des moyens 16 de stockage de contenus numériques accessibles en lecture seule par le serveur 10.

L'installation comporte en outre un module 18 de gestion de transactions financières, pouvant émettre et recevoir des informations relatives à des commandes de contenus numériques et un module 20 de téléchargement de contenus numériques achetés, via le réseau Internet 12. Ces modules sont également, par exemple, des serveurs de type classique reliés au réseau Internet 12 par des liaisons de communication bidirectionnelle classiques 22 et 24.

Le serveur de diffusion 10, le serveur de gestion 18 et le serveur de téléchargement 20 sont indépendants et sont, dans cet exemple, localisés sur des sites différents. Il est également possible en variante que les serveurs de diffusion 10, de gestion 18 et de téléchargement 20 soient localisés sur un même site ou soient implémentés par un seul serveur physique. Dans une autre variante, le serveur de gestion 18 et le serveur de téléchargement 20 sont localisés sur un site (ou réalisés sous la forme d'un seul serveur) indépendant du serveur de diffusion 10.

Le serveur de gestion 18 et le serveur de téléchargement 20 sont reliés à des moyens 28 de stockage de commandes. Ceux-ci sont accessibles en lecture seule par le serveur de téléchargement 20 et en écriture par le serveur de gestion de transactions 18.

Les moyens 16 de stockage de contenus numériques sont en outre accessibles, en lecture seule, par le serveur de téléchargement 20.

L'installation comporte aussi au moins un terminal distant 30 connecté au réseau Internet 12, au moyen d'une liaison bidirectionnelle 32. Ce terminal distant 30 comporte un écran d'affichage 34, adapté pour la présentation des contenus numériques diffusés par le serveur de diffusion 10. Le terminal distant 30 est en outre autorisé à échanger des données avec le serveur 18 de gestion de transactions et le serveur de téléchargement 20.

Enfin, le terminal distant 30 comporte un module de micro-paiement (non représenté) mettant en oeuvre un procédé de micro-paiement et est associé à un lecteur 36 de type classique, dans lequel on peut insérer une carte à puce 38, formant porte-monnaie électronique. Cette carte à puce comporte un numéro de série $C_1$ unique permettant d'identifier un utilisateur du terminal distant 30, propriétaire de cette carte, tout en conservant son anonymat. Le module de micro-paiement, le lecteur 36 et le porte-monnaie électronique 38, constituent des moyens de micro-paiement classiques 39.

Le procédé de micro-paiement mis en oeuvre par le module de micro-paiement installé sur le terminal distant 30 est également mis en oeuvre par le serveur 18 de gestion de transactions.

L'installation comporte en outre un serveur 40 de distribution de jetons de paiement, formant moyens de gestion de micro-paiement électronique, connecté lui aussi au réseau Internet 12 au moyen d'une liaison bidirectionnelle 42. Ce serveur 40 de distribution de jetons de paiement est relié à une institution financière 44 grâce à un réseau privé sécurisé 46.

Le serveur 40 de distribution de jetons de paiement est adapté pour délivrer des jetons de paiement au terminal distant 30, ceux-ci étant ensuite stockés dans le porte-monnaie électronique 38 par l'intermédiaire des moyens de micro-paiement 39. Le serveur 40 de distribution de jetons de paiement est en outre adapté pour récupérer des jetons de paiement collectés, notamment à partir du porte-monnaie électronique 38, par le module 18 de gestion de transactions. Un tel serveur 40 de distribution de jetons est connu et ne sera pas détaillé davantage.

Il met également en oeuvre le procédé de micro-paiement mis en oeuvre par le terminal distant 30 et le serveur 18 de gestion de transactions.

Dans le cadre de ce procédé de micro-paiement de type classique, le serveur 40 de distribution de jetons détient une première clé secrète $K_1$ de preuve de paiement.

Cette première clé secrète $K_1$ est une clé dite maîtresse qui est également détenue par le serveur 18 de gestion de transactions et par le serveur de téléchargement 20. Ces derniers la reçoivent de manière sécurisée sans passer par le réseau Internet 12, après s'être identifiés pour la première fois auprès du serveur 40 de distribution de jetons. Elle est ensuite stockée par le serveur 18 de gestion de transactions et par le serveur 20 de téléchargement de manière sécurisée.

De plus, la carte à puce formant porte-monnaie électronique 38 contient une clé secrète dérivée $M_2$ de cryptage symétrique, obtenue à partir de la clé maîtresse $K_1$ de preuve de paiement et du numéro de série $C_1$ de la carte à puce formant porte-monnaie électronique 38. Cette clé secrète dérivée $M_2$ de cryptage symétrique est donnée par la formule suivante :

$$M_2 = Df (K_1, C_1),$$

Où Df est une fonction de dérivation de clé classique, telle que par exemple la fonction HMAC-SHA1.

Cette clé secrète dérivée $M_2$ de cryptage symétrique est stockée dans la mémoire de la carte à puce 38 lors de sa fabrication.

Le procédé de micro-paiement utilisé est par exemple celui décrit dans la demande de brevet français No. 00 08867, en date du 7 Juillet 2000, déposée au nom de THOMSON MULTIMEDIA et portant le titre « Système et procédé de gestion de transactions de micro-paiement, terminal de client et équipement de marchand correspondants ».

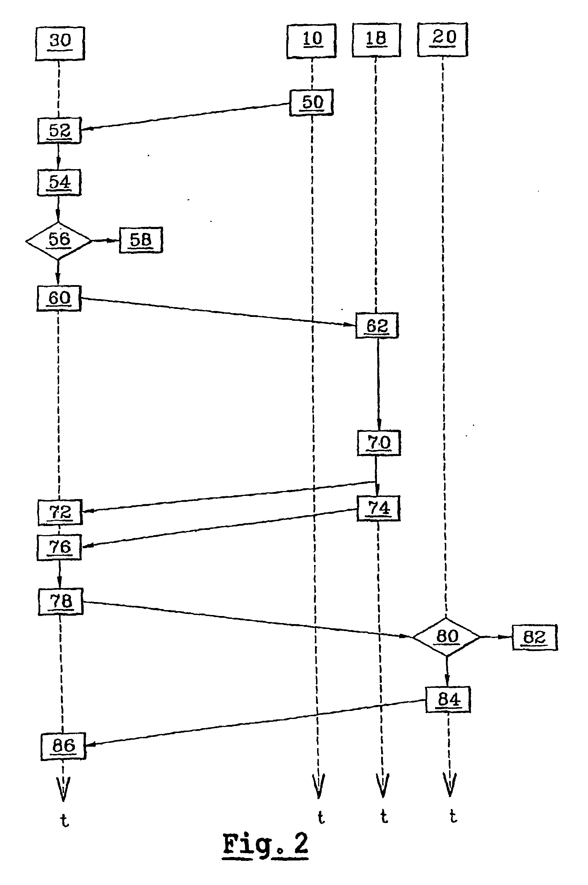

On a représenté sur la figure 2 selon un premier mode de réalisation, les étapes d'un procédé de gestion d'achats de contenus numériques, mis en oeuvre dans l'installation décrite précédemment, entre le terminal 30 et les serveurs de diffusion 10, de gestion 18 et de téléchargement 20.

Lors d'une première étape 50, le serveur 10 de diffusion émet, selon une programmation préétablie, un contenu numérique extrait des moyens 16 de stockage de contenus numériques.

Ce contenu numérique diffusé est par exemple un fichier audio F codé conformément au standard MP3 contenant par exemple une chanson ou un morceau de musique. Le standard MP3 autorise l'insertion d'informations commerciales dans le fichier audio diffusé, au moyen d'une étiquette conforme au standard ID3v2. De façon classique, cette étiquette comporte nécessairement des informations concernant le prix du contenu numérique diffusé (par exemple le prix de la chanson diffusée) et l'adresse universelle URL du vendeur de ce contenu numérique. L'étiquette peut en outre comporter des informations concernant la date de fin de validité du prix du contenu numérique, les moyens de délivrance du contenu après l'achat, le nom du vendeur, une description textuelle du contenu numérique, une image représentant le logo du vendeur, ou toute autre information préconisée par le standard ID3v2.

Le contenu numérique est diffusé par le serveur de diffusion 10 à travers le réseau Internet 12 à l'attention d'abonnés ou d'utilisateurs connectés au réseau.

En particulier, l'utilisateur du terminal distant 30 reçoit ce contenu numérique diffusé au moyen d'une interface de présentation, obtenue par exemple, par l'exécution d'une appliquette Java, téléchargée au préalable à partir du serveur de diffusion 10.

Alors que le contenu numérique est diffusé (ou immédiatement après sa diffusion), lors d'une étape 52, l'utilisateur du terminal distant 30 active la génération d'un bon de commande pour commander le contenu diffusé, par un simple clic de souris sur un bouton actif de l'interface. Cette activation provoque la présentation, sur l'écran d'affichage 34, d'un bon de commande comportant au moins une partie des informations contenues dans l'étiquette décrite précédemment et reçues par le terminal distant 30 en même temps que le contenu numérique diffusé.

Lors de l'étape 54 suivante, l'utilisateur confirme de façon classique sa commande après avoir pris connaissance du bon de commande proposé.

Le terminal 30 transmet alors les informations concernant le prix du contenu numérique commandé aux moyens de micro-paiement 39 qui vérifient, lors d'une étape de test 56, que le porte-monnaie électronique 38 comporte suffisamment de jetons pour effectuer l'achat. On suppose que chaque jeton représente une valeur prédéterminée et que le prix du contenu numérique correspond à un nombre donné de jetons.

Si le porte-monnaie électronique ne comporte pas suffisamment de jetons, on passe à une étape 58 d'arrêt de la commande. Sinon, on passe à une étape 60 de transmission du bon de commande confirmé.

Lors de cette étape 60, les moyens de micro-paiement 39 débitent le porte-monnaie électronique 38 d'un nombre $C_2$ de jetons correspondant au prix indiqué dans l'étiquette.

Le terminal 30 transmet alors au serveur 18 de gestion de transactions, via le réseau Internet 12, une commande d'achat définitive C comportant au moins une partie des informations commerciales relatives au contenu numérique acheté, telles que par exemple une description $C_3$ permettant d'identifier ce contenu, le numéro de série $C_1$ du porte-monnaie électronique 38 et le nombre $C_2$ de jetons extraits de ce porte-monnaie électronique 38. La description $C_3$ est par exemple le titre de la chanson commandée.

La transmission sécurisée de cette commande d'achat définitive est assurée de façon classique par le procédé de micro-paiement mis en oeuvre par le terminal distant 30.

Lors de l'étape 62 suivante, le serveur 18 de gestion de transactions reçoit la commande d'achat définitive C. Il génère alors lors de l'étape 64 un numéro $M_1$ d'identification de transaction associé de façon unique à cette commande d'achat C.

Lors de cette même étape, le serveur 18 de gestion de transactions commande la création, dans les moyens 28 de stockage de commandes, d'un fichier correspondant à cette commande C et comportant le numéro $M_1$ d'identification de transaction, le numéro de série $C_1$ du porte-monnaie électronique 38 et la description $C_3$ du contenu numérique acheté. Dans ce fichier sont en outre conservés des paramètres de micro-paiement $M_3$ comprenant par exemple le prix de la transaction, le numéro $M_1$ d'identification de transaction, etc. Une copie de ces paramètres $M_3$ est également conservée par les moyens de micro-paiement 39.

Ensuite, lors d'une étape 70, le serveur 18 de gestion de transactions transmet le numéro $M_1$ d'identification de transaction au terminal distant 30.

Le numéro $M_1$ d'identification est reçu et stocké par le terminal distant 30 lors d'une étape 72.

Par ailleurs, suite à l'étape 70 également, le serveur 18 de gestion de transactions génère un ticket de téléchargement T, au cours d'une étape 74.

Ce ticket de téléchargement T comporte l'adresse universelle URL $T_1$ du serveur de téléchargement 20 et un germe $T_2$, généré par le serveur 18 de gestion de transactions, qui sera utilisé ultérieurement par le serveur de téléchargement 20. Le germe $T_2$ est également stocké dans les moyens 28 de stockage de commandes, dans le fichier précité correspondant à la commande C.

Pour plus de sécurité, ce ticket de téléchargement T est crypté à l'aide d'une seconde clé secrète symétrique $K_2$ générée par le serveur 18 de gestion de transactions à partir de la clé secrète dérivée $M_2$ et des paramètres de micro-paiement $M_3$.

En effet, le serveur 18 de gestion de transactions est capable de retrouver la clé secrète dérivée $M_2$ à partir de la clé secrète maîtresse $K_1$ et du numéro de série $C_1$ qui lui a été transmis lors de l'étape 62.

La seconde clé secrète symétrique $K_2$ est obtenue à l'aide de la fonction de dérivation Df précédemment définie, de sorte que :

$$K_2 = Df\,(M_2, M_3).$$

Ce qui donne la formule suivante, pour T :

$$T = E_{K_2}\,(T_1 \mid T_2),$$

où le symbole « | » désigne la concaténation de données.

On notera que $K_2$ peut aussi être obtenue à l'aide d'une fonction de dérivation Df différente de Df.

Lors de l'étape de réception 76 suivante, le terminal 30 reçoit le ticket de téléchargement crypté. Il est capable de générer la seconde clé secrète symétrique $K_2$, lui aussi, à partir de la clé secrète dérivée $M_2$, des paramètres de micro-paiement $M_3$ reçu à l'étape 72 et de la fonction Df. Il est donc le seul terminal à pouvoir décrypter le ticket de téléchargement T transmis par le serveur 18 de gestion de transactions.

Lors de l'étape 78 suivante, le terminal 30 envoie un message P de demande de téléchargement du contenu numérique acheté au serveur de téléchargement 20. Ce message P formant preuve de paiement comporte le numéro $M_1$ d'identification de transaction, la description $C_3$ du contenu numérique acheté et le numéro de série $C_1$ de la carte à puce 38. Il est authentifié par un message d'authentification $P_4$ contenu dans le message P. Ce message d'authentification $P_4$ est calculé en appliquant aux données précitées contenues dans la preuve de paiement P une fonction de hachage MAC classique, utilisant la clé secrète dérivée $M_2$. Il en résulte que :

$$P_4 = MAC_{M_2}\,(M_1 \mid C_1 \mid C_3) \text{ et } P = (M_1 \mid C_1 \mid C_3 \mid P_4).$$

Cette preuve de paiement P est reçue par le serveur de téléchargement 20 lors d'une étape de test 80. Lors de cette étape 80, le serveur de téléchargement 20 vérifie l'authenticité du message d'authentification $P_4$ à l'aide de la clé secrète dérivée $M_2$, qu'il retrouve à partir de la clé secrète $K_1$ et du numéro de série $C_1$ contenu dans la preuve de paiement P, pour vérifier que les données contenues dans le message $P_4$ correspondent bien au numéro $M_1$ d'identification de transaction, à la description $C_3$ du contenu numérique acheté et au numéro de série $C_1$ de la carte à puce 38.

Si la vérification échoue, on passe à une étape 82 d'annulation du téléchargement, car le serveur de téléchargement 20 a alors la preuve que le message reçu ne provient pas de l'acheteur du contenu numérique.

Par contre, si la vérification réussit cela prouve que le terminal distant 30 possède la clé secrète dérivée $M_2$ et est donc l'acheteur du contenu numérique. On passe alors à une étape 84 de téléchargement de ce contenu numérique. Pour cela, le serveur de téléchargement 20 accède aux moyens 16 de stockage de contenus numériques et copie un fichier F' correspondant au contenu numérique acheté. Ce fichier peut être identique au fichier F diffusé par le serveur de diffusion 10, mais peut également être de nature différente. En effet, même si F et F' doivent comporter le même contenu multimédia, les niveaux de qualité exigés pour le fichier diffusé F et le fichier téléchargé F' ne sont pas nécessairement les mêmes.

Pour transmettre de façon sécurisée ce fichier F', le serveur de téléchargement 20 génère une clé pseudo-aléatoire $K_3$ de même taille que le fichier F' à transmettre. La clé pseudo-aléatoire $K_3$ est générée à l'aide d'un générateur pseudo-aléatoire utilisant comme variable d'entrée, le germe $T_2$ généré par le serveur 18 de gestion de transactions lors de l'étape 74. Ce germe $T_2$ est récupéré par le serveur de téléchargement 20 dans les moyens 28 de stockage de la commande à l'aide des informations contenues dans la preuve de paiement P. Le serveur de téléchargement 20 combine la clé pseudo-aléatoire $K_3$ avec le fichier à transmettre F' à l'aide d'un mélangeur de type XOR, pour former un fichier de chiffrement $F_3 = K_3$ XOR F'.

Ce fichier de chiffrement $F_3$ est transmis au terminal 30, à l'aide d'un protocole de téléchargement assurant une intégrité du contenu téléchargé.

Enfin, lors d'une dernière étape 86, le terminal 30 reçoit le fichier chiffré et, de même que le serveur de téléchargement 20, génère la clé pseudo-aléatoire $K_3$ à partir du germe $T_2$ qu'il a reçu lors de l'étape 76 et du générateur pseudo-aléatoire. Il en déduit alors le fichier F' comportant le contenu numérique acheté, par la formule suivante :

$$F' = F_3 \text{ XOR } K_3.$$

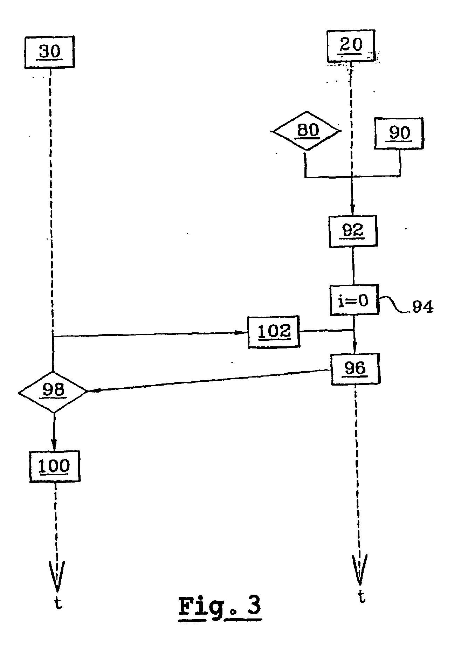

On a représenté partiellement sur la figure 3, les étapes d'un procédé de gestion d'achat selon un second mode de réalisation. Ce procédé de gestion d'achat est mis en oeuvre dans l'installation décrite à la figure 1, entre le terminal 30 et le serveur de téléchargement 20.

Ce procédé de gestion d'achat comporte les même étapes 50 à 82 que le procédé décrit précédemment. Celles-ci ne sont donc pas représentées sur la figure 3, à l'exception de l'étape 80, et ne seront pas décrites.

Ce procédé comporte une étape 90 de codage, pouvant être effectuée par le serveur de téléchargement 20 à n'importe quel moment puisqu'elle ne dépend pas de paramètres liés au terminal 30. Lors de cette étape, le serveur de téléchargement 20 divise le fichier F' en n sous-fichiers $F'_i$ ($1 \leq i \leq n$), à partir desquels il génère n sous-fichiers $S_i$ ($1 \leq i \leq n$).

Les sous-fichiers $S_i$ sont calculés de la façon suivante :

$$S_n - (F'_n \mid H (F'_n)),$$

$$S_i = (F'_i \mid H (S_{i+1})), \text{ pour } 1 \leq i \leq n\text{-}1.$$

Dans ces équations, H représente une fonction classique de hachage à sens unique.

Lors d'une étape 92 suivant l'étape de test 80, si la vérification de la signature $P_4$ de la preuve de paiement a réussi, le serveur de téléchargement 20 génère un sous-fichier $S_0$ donné par la formule suivante :

$$S_0 = (H (S_1) \mid n \mid MAC_{M2} (H(S_1) \mid n)).$$

Ainsi au lieu de transmettre le fichier F' en une seule fois, le serveur de téléchargement 20 transmet successivement les sous-fichiers $S_i$, pour i compris entre 0 et n, au terminal distant 30.

Pour ce faire, on passe à une étape 94, lors de laquelle le serveur de téléchargement 20 initialise un compteur i à 0.

Lors de l'étape 96 suivante, le serveur de téléchargement 20 transmet le sous-fichier $S_i$ au terminal distant 30.

Ensuite, lors d'une étape de test 98, le terminal distant 30 vérifie l'intégrité du sous-fichier $S_i$ reçu.

Si l'indice i est égal à 0, le terminal distant 30 vérifie que la signature du sous-fichier $S_0$ correspond aux données contenues dans ce sous-fichier, c'est-à-dire le nombre n et la valeur de H ($S_1$). Dès lors, le terminal 30 connaît le nombre n de sous-fichiers qu'il doit recevoir de la part du serveur de téléchargement 20 à la suite du sous-fichier $S_0$, et la valeur de hachage du prochain sous-fichier $S_1$ à recevoir.

Si l'indice i est compris entre 1 et n-1, dès la réception du sous fichier $S_i$, le terminal 30 applique la fonction de hachage H à ce sous-fichier pour vérifier que sa valeur de hachage correspond bien à celle que le terminal 30 a reçue à l'étape de réception précédente.

De nouveau, le terminal 30 stocke en mémoire la valeur de hachage du sous-fichier suivant $S_{i+1}$.

Si l'indice i vaut n, le terminal 30 vérifie l'intégrité du sous fichier $S_n$ reçu, en appliquant comme précédemment, la fonction de hachage H à ce sous fichier $S_n$, pour vérifier qu'il correspond bien à la valeur qu'il a stockée lors de l'étape précédente. Ensuite, si la vérification réussit, le terminal distant 30 stocke $F'_n$ en mémoire.

Lors de cette étape de test 98, si la vérification échoue ou si l'indice i vaut n, on passe à une étape 100 d'arrêt du téléchargement.

Par contre, si la vérification réussit et si i est strictement inférieur à n, on passe à une étape 102, lors de laquelle le terminal distant 30 stocke $F'_i$ en mémoire et l'indice i est incrémenté d'une unité. On reprend alors le procédé à l'étape 96 de transmission.

A la fin de ce procédé, le terminal distant 30 a stocké en mémoire tous les fichiers $F'_i$ et peut ainsi reconstituer le fichier F' du contenu numérique acheté.

De façon indépendante du procédé de gestion d'achat, le serveur 18 de gestion de transactions transmet, au centre 40 de distribution de jetons de paiement, un nombre de jetons récoltés pendant une durée prédéterminée, comportant notamment le nombre $C_2$ de jetons extraits du porte-monnaie électronique 38 pendant la transaction précédemment décrite.

En échange, le centre 40 de distribution de jetons de paiement crédite du montant correspondant un compte bancaire du serveur 18 de gestion de transactions, géré par l'institution financière 44. Ce procédé de valorisation des jetons de paiement est classique et ne sera donc pas détaillé.

Il apparaît clairement que l'installation de gestion d'achat de contenu numérique selon l'invention facilite l'achat impulsif d'un contenu numérique, notamment pendant sa diffusion, en permettant la génération automatique d'une commande d'achat à partir des informations diffusées avec ce contenu numérique, le téléchargement de ce contenu numérique acheté étant assuré par le serveur de téléchargement 20.

Il est également à noter que l'invention permet l'achat de contenus à l'unité. Par exemple, il permet l'achat d'une chanson unique et pas nécessairement de l'ensemble de l'album contenant la chanson diffusée.

Enfin, on notera que l'invention n'est pas limitée aux modes de réalisation décrits précédemment.

En effet, en variante, les fichiers F et F' ne sont pas stockés dans les mêmes moyens de stockage 16. Le fichier F est par exemple stocké dans des premiers moyens de stockage de contenus numériques destinés à être diffusés, ces premiers moyens de stockages étant accessibles par plusieurs serveurs de diffusion tels que le serveur 10. Le fichier F' est quant à lui stocké dans des seconds moyens de stockage de contenus numériques destinés à être téléchargés, ces seconds moyens de stockage étant accessibles par plusieurs serveurs de téléchargement tels que le serveur 20.

## Revendications

1. Procédé de gestion d'achat de contenu numérique comportant les étapes consistant pour un terminal (30) à :

    a) recevoir un contenu numérique diffusé (50) par des moyens de diffusion (10) ;
    b) générer (52) une commande d'achat dudit contenu ;
    c) transmettre (62) ladite commande d'achat à des moyens (18, 20, 28) de traitement de la commande ; et
    d) télécharger (84) ledit contenu à partir desdits moyens de traitement (18, 20, 28) ;

    **caractérisé en ce que** le procédé comporte en outre, antérieurement à l'étape d) de téléchargement :

    - une étape de paiement (60) dudit contenu à l'issue de laquelle le terminal (30) reçoit (76) desdits moyens de traitement un ticket de téléchargement, ledit ticket de téléchargement contenant des informations utilisées par le terminal (30) pour télécharger le contenu à l'étape d), et
    - une étape d'envoi (78) par ledit terminal (30) d'une preuve de paiement auxdits moyens de traitement ; lesdites informations contenues dans le ticket de téléchargement

    comportant un germe de génération, à l'aide d'un générateur pseudo-aléatoire l'utilisant comme variable d'entrée, d'une clé pseudo-aléatoire, et le procédé comportant en outre les étapes de :

    génération par le terminal (30) de ladite clé pseudo-aléatoire à partir du germe contenu dans le ticket de téléchargement reçu ; et de déchiffrement, à l'aide de la clé pseudo-aléatoire, du contenu numérique reçu lors de l'étape d) de téléchargement.

2. Procédé selon la revendication 1, **caractérisé en ce que** ledit ticket de téléchargement comporte l'adresse universelle URL de moyens de téléchargement (20) faisant partie desdits moyens de traitement.

3. Procédé selon l'une des revendications 1 ou 2, **caractérisé en ce que** ledit ticket de téléchargement est transmis audit terminal (30) sous une forme cryptée à l'aide d'une clé secrète symétrique.

4. Procédé selon l'une des revendications précédentes, **caractérisé en ce que** l'étape de paiement est mise en oeuvre par ledit terminal (30) communiquant avec des moyens (18) de gestion de transactions financières auxquels est transmise ladite commande d'achat et lesquels délivrent ledit ticket de téléchargement reçu par le terminal.

5. Procédé selon la revendication 4, **caractérisé en ce que** ledit terminal reçoit en outre desdits moyens (18) de gestion de transactions financières un identifiant de transaction.

6. Procédé selon la revendication 5, **caractérisé en ce que** la preuve de paiement contient ledit identifiant de transaction reçu des moyens (18) de gestion de transactions financières et un message d'authentification.

7. Procédé selon l'une quelconque des revendications 1 à 6, **caractérisé en ce que** l'étape d) de téléchargement comporte une étape (90) de division du contenu numérique en une pluralité de sous-contenus numériques successifs et de codage de chacun de ces sous-contenus numériques, suivie d'une étape (96) de téléchargement vers ledit terminal (30) de ces sous-contenus numériques, successivement.

8. Procédé selon la revendication 7, **caractérisé en ce que** chaque sous-contenu numérique codé, à l'exception du demier, comporte le sous-contenu numérique correspondant et la valeur d'une fonction de hachage appliquée au sous-contenu numérique codé suivant.

9. Procédé selon la revendication 8, **caractérisé en ce que** l'étape de téléchargement comporte une étape (92) de génération d'un message comportant le nombre de sous-contenus numériques ainsi que la valeur de la fonction de hachage appliquée au premier sous-contenu numérique codé, ce message étant authentifié à l'aide d'une clé secrète symétrique connue uniquement des moyens de traitement de la commande (18, 20, 28) et dudit terminal (30).

10. Moyens (20) de téléchargement de contenus numériques à travers un réseau (12) de transmission d'informations, comportant des moyens de réception d'une preuve de paiement d'une commande d'achat d'un contenu numérique diffusé, **caractérisés en ce qu'**il comporte en outre des moyens de transmission de ce contenu numérique à destination d'un terminal émetteur de la preuve de paiement, lesdits moyens de téléchargement (20) étant adaptés à ne transmettre le contenu numérique sous une forme cryptée qu'après réception de la preuve de paiement et comportant en outre des moyens de division du contenu numérique en une pluralité de sous-contenus numériques successifs, des moyens de codage de chacun de ces sous-contenus numériques et des moyens de transmissions successives de ces sous-contenus numériques.

11. Moyens de téléchargement (20) selon la revendication 10, **caractérisés en ce que** chaque sous-contenu numérique codé, à l'exception du demier, comporte un sous-contenu numérique correspondant et la valeur d'une fonction de hachage appliquée au sous-contenu numérique suivant.

12. Moyens de téléchargement (20) selon la revendication 11, **caractérisés en ce qu'**ils comportent des moyens de génération d'un message comportant le nombre de sous-contenus numériques ainsi que la valeur de la fonction de hachage appliquée au premier sous-contenu numérique codé.

## Patentansprüche

1. Verfahren für die Verwaltung eines Kaufs eines digitalen Inhalts mit den Schritten für ein Terminal (30) von:

    a) Empfang eines durch Sendemittel (10) gesendeten digitalen Inhalts (50),
    b) Erzeugung (52) einer Kauforder für den Inhalt,
    c) Übertragung (62) der Kauforder zu Mitteln (18, 20, 28) zur Verarbeitung der Order, und
    d) Herunterladen (84) des Inhalts von den Verarbeitungsmitteln (18, 20, 28),

**dadurch gekennzeichnet, dass**
das Verfahren außerdem vor dem Schritt d) des Herunterladens Folgendes enthält:

- einen Schritt zur Bezahlung (60) des Inhalts wonach das Terminal von den Verarbeitungsmitteln, ein Herunterlade-Ticket empfängt (76), wobei das Herunterlade-Ticket Informationen enthält, die von dem Terminal (30) zum Herunterladen des Inhalts beim Schritt d) benutzt werden, und
- einem Schritt zur Lieferung (78) durch das Terminal (30) eines Bezahlungsnachweises zu den Verarbeitungsmitteln;

die Informationen, die in dem Herunterlade-Ticket enthalten sind, einen Startwert für die Erzeugung eines Pseudo-Zufallsschlüssels mittels eines Pseudo-Zufallsgenerators enthält, der dem Startwert als Eingangsvariable benutzt und das Verfahren außerdem die folgenden Schritte enthält:

    Erzeugung durch das Terminal (30) des Pseudo-Zufallsschlüssels aus dem Startwert, der in dem empfangenen Herunterlade-Ticket enthalten ist, und

Entschlüsselung durch den Pseudo-Zufallsschlüssels des beim Schritt d) der Herunterladung empfangenen digitalen Inhalts.

2. Verfahren nach Anspruch 1, **dadurch gekennzeichnet, dass** das Herunterlade-Ticket die universelle Adresse URL der Herunterlademittel (20) enthält, die einen Teil der Verarbeitungsmittel bilden.

3. Verfahren nach einem der Ansprüche 1 oder 2, **dadurch gekennzeichnet, dass** das Herunterlade-Ticket zu dem Terminal (30) in einer Form übertragen wird, die mittels eines symmetrischen Geheimschlüssels verschlüsselt ist.

4. Verfahren nach einem der vorangehenden Ansprüche, **dadurch gekennzeichnet, dass** der Schritt der Bezahlung durch das Terminal (30) erfolgt, der mit den Mitteln (18) zur Verwaltung der finanziellen Transaktionen kommuniziert, zu denen die Kauforder übertragen wird und die das durch das Terminal empfangene Herunterlade-Ticket liefert.

5. Verfahren nach Anspruch 4, **dadurch gekennzeichnet, dass** das Terminal außerdem Verwaltungsmittel (18) von den finanziellen Transaktionen einen Identifizierer für die Transaktion empfängt.

6. Verfahren nach Anspruch 5, **dadurch gekennzeichnet, dass** der Zahlungsnachweis den Transaktionsidentifizierer enthält, der von den Verwaltungsmitteln (18) von der finanziellen Transaktion empfangen wird und einer Authentifikationsnachricht.

7. Verfahren nach einem der Ansprüche 1 bis 6, **dadurch gekennzeichnet, dass** der Schritt d) zum Herunterladen einen Schritt (90) enthält zur Aufteilung des digitalen Inhalts in mehrere aufeinander folgende digitale Unterinhalte und zur Codierung jedes dieser digitalen Unterinhalte, gefolgt von einem Schritt (96) zum Herunterladen dieser digitalen Unterinhalte nacheinander zu dem Terminal (30).

8. Verfahren nach Anspruch 7, **dadurch gekennzeichnet, dass** jeder digitale codierte Unterinhalt, mit Ausnahme des Letzten, den digitalen Unterinhalt enthält, der dem Wert einer Hash-Funktion entspricht, der auf den folgenden codierten digitalen Unterinhalt angewendet wird.

9. Verfahren nach Anspruch 8, **dadurch gekennzeichnet, dass** der Schritt zum Herunterladen einen Schritt (92) enthält zur Erzeugung einer Nachricht mit der Zahl der digitalen Unterinhalte sowie dem Wert, der auf den ersten codierten digitalen Unterinhalt angewendeten Hasch-Funktion, und die Nachricht mittels eines symmetrischen Geheimschlüssels authentifiziert wird, der nur den Order-Verarbeitungsmitteln (18, 20, 28) und dem Terminal (30) bekannt ist.

10. Mittel (20) zum Herunterladen der digitalen Inhalte über ein Daten-Übertragungsnetz (12) mit Empfangsmitteln eines Zahlungsnachweises einer Kauforder eines gesendeten digitalen Inhalts, **dadurch gekennzeichnet, dass** er außerdem Mittel zur Übertragung des digitalen Inhalts für ein Senderterminal des Zahlungsnachweises enthält, dass die Mittel zum Herunterladen (20) geeignet sind für die Übertragung des digitalen Inhalts in verschlüsselter Form nach dem Empfang des Zahlungsnachweises und außerdem enthält:

Mittel zur Aufteilung des digitalen Inhalts in mehrere aufeinanderfolgende digitale Unterhalte, Mittel zur Codierung jedes dieser digitalen Unterinhalte und Mittel zur aufeinanderfolgenden Übertragung dieser digitalen Unterinhalte.

11. Mittel zum Herunterladen (20) nach Anspruch 10, **dadurch gekennzeichnet, dass** jeder codierte digitale Unterinhalt, mit Ausnahme des Letzten, einen digitalen Unterinhalt enthält, der dem Wert einer Hash-Funktion entspricht, die bei dem folgenden digitalen Unterinhalt angewendet wird.

12. Mittel zum Herunterladen (20) nach Anspruch 11, **dadurch gekennzeichnet, dass** sie Mittel zur Erzeugung einer Nachricht mit der Anzahl der digitalen Unterinhalte sowie des Wertes der Hash-Funktion enthalten, die bei dem ersten, codierten, digitalen Unterinhalt angewendet wird.

**Claims**

1. Method for managing purchase of digital contents comprising the steps consisting for a terminal (30) in:

a) receiving a digital content broadcast (50) by broadcasting means (10);
b) generating (52) a purchase order for said content;
c) transmitting (62) said purchase order to means (18, 20, 28) for processing the order; and
d) downloading (84) said content from said processing means (18, 20, 28);

**characterized in that** the method also comprises, before the download step d):

- a step of payment (60) for said content after which the terminal (30) receives (76) from said processing means a download ticket, said download ticket containing information used by the terminal (30) to download the content in step d), and
- a step of sending (78) by said terminal (30) of a proof of payment to said processing means;

said information contained in said download ticket comprising a seed to generate, with the aid of a pseudo-random generator using it as input variable, a pseudo-random key and the method also comprising the steps of:

generation by the terminal (30) of said pseudo-random key based on the seed contained in the received download ticket; and of

decipherment, with the aid of the pseudo-random key, of the digital content received in the download step d).

2. Method according to claim 1, **characterized in that** said download ticket comprises the URL universal address of download means (20) forming part of said processing means.

3. Method according to one of claims 1 or 2, **characterized in that** said download ticket is transmitted to said terminal (30) in a form encrypted with the aid of a symmetrical secret key.

4. Method according to one of the previous claims, **characterized in that** the payment step is implemented by said terminal (30) communicating with financial transaction management means (18) to which is transmitted said purchase order and which deliver said download ticket received by the terminal.

5. Method according to claim 4, **characterized in that** said terminal also receives from said financial transaction management means (18) a transaction identifier.

6. Method according to claim 5, **characterized in that** the proof of payment contains said transaction identifier received from the financial transaction management means (18) and an authentication message.

7. Method according to any one of claims 1 to 6, **characterized in that** the download step d) comprises a step (90) of dividing the digital content into a plurality of successive digital sub-contents and of encoding each of these digital sub-contents, followed by a step (96) of downloading these digital sub-contents in succession to said terminal (30).

8. Method according to claim 7, **characterized in that** each encoded digital sub-content, with the exception of the last, comprises the corresponding digital sub-content and the value of a hash function applied to the subsequent encoded digital sub-content.

9. Method according to claim 8, **characterized in that** the download step comprises a step (92) of generating a message comprising the number of digital sub-contents and the value of the hash function applied to the first encoded digital sub-content, this message being authenticated with the aid of a symmetrical secret key known only to the order processing means (18, 20, 28) and said terminal (30).

10. Means (20) for downloading digital contents via a data transmission network (12), comprising means for receiving a proof of payment of an order to purchase a broadcast digital content, **characterized in that** it also comprises means for transmitting this digital content to a terminal sending the proof of payment, said download means (20) being suitable for transmitting the digital content in an encrypted form only after reception of the proof of payment and also comprising

means for dividing the digital content into a plurality of successive digital sub-contents, means for encoding each of these digital sub-contents and means for successive transmission of these digital sub-contents.

11. Download means (20) according to claim 10, **characterized in that** each encoded digital sub-content, with the exception of the last, comprises a corresponding digital sub-content and the value of a hash function applied to the subsequent digital sub-content.

12. Download means (20) according to claim 11, **characterized in that** they comprise means for generating a message comprising the number of digital sub-contents and the value of the hash function applied to the first encoded digital sub-content.

Fig. 1

**Fig. 2**

Fig. 3